# EUROPEAN PATENT SPECIFICATION

(11) **EP 3 750 952 B1**
(45) Date of publication and mention of the grant of the patent: **30.11.2022**
(21) Application number: 19179421.3
(22) Date of filing: 11.06.2019
(51) Int. Cl.: C08J 9/14

(54) **PROCESS FOR PRODUCING MELAMINE-FORMALDEHYDE FOAMS USING FLUORINATED BLOWING AGENTS**
VERFAHREN ZUR HERSTELLUNG VON MELAMIN-FORMALDEHYD-SCHAUMSTOFFEN UNTER VERWENDUNG VON FLUORIERTEN TREIBMITTELN
PROCÉDÉ DE PRODUCTION DE MOUSSES DE MÉLAMINE-FORMALDÉHYDE À L'AIDE D'AGENTS D'EXPANSION FLUORÉS

(43) Date of publication of application: 16.12.2020
(73) Proprietor: BASF SE, 67069 Ludwigshafen am Rhein (DE)
(72) Inventor: WEISSE, Sebastian Alexander, 67056 Ludwigshafen (DE); SZEIFERT, Johann Martin, 67056 Ludwigshafen (DE); VATH, Bernhard, 67056 Ludwigshafen (DE)
(74) Representative: BASF IP Association

(56) References cited:
- CN-A- 107 522 829
- CN-A- 109 438 749
- JP-A- H11 269 343

## Description

The present invention relates to a process for producing a melamine-formaldehyde foam, said process comprising heating and foaming a mixture comprising at least one melamine-formaldehyde precondensate, at least one curative, at least a surfactant and a blowing agent mixture which comprises 2.5 to 20 wt.-% of a fluorinated ether as well as the melamine-formaldehyde foam with a fine and homogenic pore structure obtainable by this process.

WO 2014/037233 discloses a process for producing melamine-formaldehyde foams, said process comprising heating and foaming a mixture, comprising at least one melamine-formaldehyde precondensate, at least one curative, a surfactant mixture, at least one salt of an inorganic acid and/or of an organic carboxylic acid, at least one blowing agent using microwave radiation. Useful physical blowing agents include for example hydrocarbons, halogenated, especially fluorinated, hydrocarbons, alcohols, ethers, ketones and esters. Preferred physical blowing agents are butane and/or pentane.

SU 1219604 discloses a process for producing melamine-formaldehyde foams using trichlortri-flourethane as blowing agent.

CN 101423648 A discloses melamine foam pipe insulation material and its preparation. As blowing agent environmentally friendly hydrochlorofluorocarbons, preferably I HFC-141b, are utilized.

CN109438749 provides a simple, low cost process for producing a melamine-formaldehyde resin foam having strong hydrophobic properties. The hydrophobic melamine formaldehyde resin foamed plastic comprises, by weight, 30-40 parts of melamine formaldehyde, 20-30 parts of paraformaldehyde, 1-2 parts of stabilizers, 15-25 parts of water,4-7 parts of emulsifiers, 2-4 parts of curing agents, 5-8 parts of foaming agents, 3-6 parts of blowing promoters and 5-20 parts of hydrophobic agents. The foaming auxiliary agent is a silicone fluid, polyurethane, nonafluorobutyl ether a mixture thereof.

CN107522827 discloses a melamine resin, a preparation method and a foamed melamine solution. The melamine resin is prepared from the following components of raw materials in parts by weight through polymerization: 100 parts of melamine, 30-120 parts of formaldehyde, 2-50 parts of a modification monomer, 0.5-5 parts of a functional compound and 1-3 parts of a catalyst. The foamed melamine solution comprises
the following components in parts by weight: 100 parts of the melamine resin, 1-10 parts of a surfactant, 1-5 parts of a foaming agent, 0-8 parts of a foam stabilizer and 0.5-15 parts of a cross-linking agent. Pentane, hexane, petroleum ether, alkanes or
alkane and pentane alkoxy fluoride alkoxy fluoride, hexane, petroleum ether complex may be used as blowing agents.

JP 11-269343 A2 discloses the use of fluoro ether as blowing agent for the production of melamine-formaldehyde foams with fine cell structure and cell sizes in the range from 50 - 100 µm. As fluoro ether compounds with the formula CₙH₂ₙ₊₁OCₘF₂ₘ₊₁ with n=1-4 und m=1-8, preferably CF₃CF₂OCH₃ are used.

WO 98/17715 discloses a process for producing resol foams of low density using perfluorinated ethers along with a hydrogenated chlorofluorocarbon (HCFC) and hydrogenated fluorocarbons (HFC) as blowing agents.

It is an objective of the present invention to provide melamine-formaldehyde foams having small cell sizes and a narrow cell sized distribution.

This objective is achieved by a process for producing a melamine-formaldehyde foam, said process comprising heating and foaming a mixture comprising at least one melamine-formaldehyde precondensate, at least one curative, at least a surfactant and a blowing agent mixture, wherein that blowing agent mixture comprises 2.5 to 20 wt.-% of a fluorinated ether.

A suitable process for producing the melamine-formaldehyde foam and the raw materials used are disclosed in WO 2014/037233.

Any condensation products of melamine and formaldehyde which are known to a person skilled in the art and are described in the literature can in principle be used as melamine-formaldehyde precondensates. Preference is given to using a melamine-formaldehyde precondensate having a molar ratio of melamine:formaldehyde ranging from 1:1.5 to 1:4, preferably from 1:1.6 to 1:3.5 and more preferably from 1:2 to 1:3. Preferred melamine-formaldehyde precondensates have an average molecular weight (number average) Mₙ ranging from 200 g/mol to 1000 g/mol, preferably from 200 g/mol to 800 g/mol and more preferably from 200 g/mol to 600 g/mol.

Emulsification of the blowing agent and stabilization of the foam in the processes of the present invention requires the addition of surfactants. Anionic, cationic and nonionic surfactants and mixtures thereof can be used as dispersant/emulsifier.

Preferably a mixture of 50 to 90 wt.-%, more preferably 65 to 90 wt.-% and most preferably 75 to 90 wt.-% of an anionic surfactant and preferably 10 to 50 wt.-%, more preferably 10 to 35 wt.-% and most preferably 10 to 25 wt.-% of a nonionic surfactant, wherein the weight percentages are each based on the total weight of the surfactant mixture, is used.

Suitable anionic surfactants include for example diphenylene oxide sulfonates, alkane- and alkylbenzenesulfonates, alkylnaphthalenesulfonates, olefinsulfonates, alkanesulfonates, alkyl ether sulfonates, fatty alcohol sulfates, fatty alcohol polyglycol ether sulfates, ether sulfates, alpha-sulfo fatty acid esters, acylaminoalkanesulfonates, acyl isethionates, alkyl ether carboxylates, N-acylsarcosinates, alkyl and alkyl ether phosphates.

Nonionic surfactants useful as a constituent part of the surfactant mixture do not contain any anionic or cationic groups, suitable nonionic surfactants being for example alkylphenol polyglycol ethers, fatty alcohol polyglycol ethers, fatty acid polyglycol ethers, fatty acid alkanolamides, EO-PO block copolymers, nonionic amine oxides, glycerol fatty acid esters, sorbitan esters and alkylpolyglucosides.

The surfactants can be added in amounts from 0.2% to 5% by weight, based on the melamine-formaldehyde precondensate.

Acidic compounds that catalyze the continued condensation of the melamine-formaldehyde precondensate may be used as curative. The amount of these curatives is generally in the range from 0.01% to 20% by weight and preferably in the range from 0.05% to 5% by weight, all based on the precondensate. Organic acids and inorganic acids can be used, examples being hydrochloric acid, sulfuric acid, phosphoric acid, nitric acid, formic acid, acetic acid, oxalic acid, toluenesulfonic acids, amidosulfonic acids and also acid anhydrides. Formic acid is the preferred curative used in the processes of the present invention

Preferably the blowing agent mixture comprises 5 to 20 wt.-% of a fluorinated ether. The blowing agent mixture preferably consist of from 5 to 20 wt.-% of a fluorinated ether and from 95 to 80 wt.-% of a hydrocarbon, alcohol, ketone or ester having a boiling point between 0 and 80°C. Preferably butane and/or pentane is used as hydrocarbon.

The fluorinated ether is preferably a compound with the formula CₙH₂ₙ₊₁OCₘF₂ₘ₊₁ with n=1-4 und m=1-8. Most preferably the fluorinated ether is selected from methylnonafluorobutylether, ethylnonofluorobutylether or mixtures therefrom.

Most preferably the blowing agent mixture is a mixture of 5 to 20 wt.-% of methylnonafluorobutylether, ethylnonofluorobutylether or mixtures therefrom and 95 to 80 wt.-% of pentane.

Preferably 1 to 40 parts by weight of the blowing agent mixture is uses per 100 parts by wt. of the at least one melamine-formaldehyde precondensate.

If a part of the s-pentane, which is generally uses for producing melamine formaldehyde forms, is partially substituted with fluorinated ethers, a finer cell morphology is achieved while the mechanical properties of the foam are maintained. Completed Substitution of the blowing agent or using it in addition leads to foam collapse or has detrimental effects on the mechanical properties.

The precondensate being foamed up generally by heating the suspension of the melamine-formaldehyde precondensate to obtain a foamed material.

The introduction of energy may preferably be effectuated via electromagnetic radiation, for example via high-frequency radiation at 5 to 400 kW, preferably 5 to 200 kW and more preferably 9 to 120 kW per kilogram of the mixture used in a frequency range from 0.2 to 100 GHz, preferably 0.5 to 10 GHz. Magnetrons are a useful source of dielectric radiation, and one magnetron can be used or two or more magnetrons at the same time.

The foamed materials produced are finally dried, removing residual water and blowing agent from the foam.

The process described provides blocks/slabs of foamed material, which can be cut to size in any desired shapes.

In a preferred embodiment the process comprises the steps of:
a) producing an aqueous mixture M comprising
   100 parts by weight of at least one melamine-formaldehyde precondensate,
   2 to 4 parts by weight, preferably 2.2 to 3.8 parts by weight and more preferably 2.7 to 3.3 parts of at least one curative,
   0.2 to 5 parts by weight, preferably 0.5 to 3 parts by weight and more preferably 1.25 to 2.3 parts by weight of a surfactant mixture,
   0.1 to 5 parts by weight, preferably 0.5 to 4 parts by weight and more preferably 1.1 to 3.6 parts by weight of at least one salt of an inorganic acid and/or of an organic carboxylic acid,
   1 to 40 parts by weight, preferably 10 to 35 parts by weight and more preferably 15 to 21 parts of at least one blowing agent,
   0.1 to 5 parts by weight, preferably 0.3 to 2 parts off at least one linear, polymer with an average molecular weight (number average) Mₙ in the range from 500 to 10.000 g/mol, preferably in the range from 3000 to 5.000 g/mol.
   25 to 60 parts by weight, preferably 30 to 50 parts by weight and more preferably 36 to 44 parts of water,
b) heating and foaming said mixture M using microwave radiation,
c) annealing the foam using hot air and/or nitrogen in a temperature range from 150°C to 290°C,

The melamine-formaldehyde foams obtainable by the processes of the present invention have densities between 4 and 50 g/l, preferably between 4 and 20 g/l, and the tensile strength values for densities between 8 and 11 g/l are above 100 kPa, measured as per DIN EN ISO 1798. The melamine-formaldehyde foams obtainable by the processes of the present invention have an open-cell structure with an open-cell content, as measured to DIN ISO 4590, of more than 80% and especially more than 90%. The average pore diameter is preferably in the range from 10 to 1000 µm and especially in the range from 50 to 500 µm (D₅₀ value, number-averaged, determined using light or electron microscopy combined with image analysis).

The melamine-formaldehyde foams obtainable by the processes of the present invention in strand or cuboid form can be cut into all desired sheet, sheeting or foil thicknesses. It is also possible to use cutting and milling processes known to a person skilled in the art to produce a very wide variety of shaped articles. The melamine-formaldehyde foams can also be one- or both-sidedly laminated or clad with covering layers, for example with paper, paperboard, glass mat, wood, gypsum board, metal sheets or foils, polymeric foils, which may optionally also be in a foamed state.

The main field of use for the melamine-formaldehyde foams obtained according to the present invention is acoustical and/or thermal insulation in aircraft, ship and motor vehicle construction, in mechanical engineering or in building construction and for cleaning, grinding and polishing sponges. The homogeneous foam structure is especially advantageous for visible insulation applications.

### Examples:

### Methods of measurement:

### Ram pressure value [N]:

All the ram pressure value measurements for assessing the mechanical/resilient properties of the melamine-formaldehyde foams were carried out as follows: A cylindrical steel ram 8 mm in diameter 10 cm in height was pressed at a right angle into a cylindrical foam sample 11 cm in diameter and 5 cm in height until the foam sample broke. The maximum force (unit: N) exerted by the ram until the foam sample broke is hereinafter also referred to as ram pressure value and provides information about the mechanical/resilient quality of the foam. The greater the ram pressure values are, the better the mechanical/resilient properties of the melamine-formaldehyde foams are

### Length-based flow resistance r [Pa•s/m²]:

The length-based flow resistance r was determined as per DIN EN ISO 29053 from 1993 (method A). The greater the length-based flow resistance of melamine-formaldehyde foam is, the better the sound absorption capacity of the foam is.

### Compression set [%]:

All the compression set value measurements for assessing the elastic properties of wet melamine formaldehyde foams were carried out as follows:
A rectangular foam sample (cut into dimensions: 40 mm x 40 mm, height: 25 mm) is soaked in deionized water and compressed for 60 min between two steel plates (1 cm thickness) to either 20 % (5 mm) or 8 % (2 mm) of its initial height.

The compression set is determined by the following formula: C = (h0 - hi) / h0, where h0 is the initial height before compression and hi is the sample thickness after compression. C0.5 denotes the compression set after 30 min and C24 after 24 hours, respectively.

### Materials used:

### Melamine-formaldehyde precondensates:

The melamine-formaldehyde precondensate was a spray-dried melamine-formaldehyde precondensate having a molar ratio of melamine:formaldehyde of 1:3.

Surfactant mixture of 80 wt.% alkanesulfonate mixture (Hostapur^{®} SAS 93) and 20 wt.-% alkyl polyethylene glycol ether mixture (Lutensol^{®} AT 80).

### Example B1 - B5 and Comparative Examples C1 - C7:

In each case, 70 parts by weight of a spray-dried melamine / formaldehyde precondensate were dissolved in 30 parts by weight of water. To this mixture was added 2.75 parts by weight of sodium formate, 3.1 parts by weight of formic acid, 1.5 parts by weight of the surfactant mixture and 17.8 to 62 parts by weight the blowing agent mixture s-pentan/methylnonafluorobutylether or s-pentan/ethylnonafleuorobutylether in the amount and weight ratio given in Table 1 and 2. This mixture was stirred vigorously and then foamed in a mould of polypropylene by irradiation of microwave energy at 2.54 GHz.

In Comparative Examples C3 - C5 methylnonafluorobutylether was used as blowing agent without pentane. This led to collapse of the foam.

**Table 1:**

| Example | Methylnonafluorobutylether [wt.-%] | s-Pentane [wt.-% | Density [kg/m³] | Ramp pressue value at 10 mm [N] | Compression set10% | Compression set 25% | Compression set 50% | Flow resistance [Pa*s/m²] |
|---|---|---|---|---|---|---|---|---|
| C1 | 0 | 17.8 | 8.3 | 23 | 6.1 | 7.0 | 9.8 | 8000 |
| B1 | 1.1 | 16.6 | 9.3 | 28 | 9.8 | 12.0 | 16.2 | 12000 |
| B2 | 1.8 | 16.0 | 8.9 | 27 | 8.8 | 11.5 | 15.4 | 14500 |
| B3 | 2.7 | 15.1 | 9.9 | 28 | 11.9 | 14.5 | 18.9 | - |
| C2 | 5.8 | 12.0 | 11,6 | 14 | - | - | - | - |
| C3 | 17,8 | 0 | - | - | - | - | - | - |
| C4 | 35,6 | 0 | - | - | - | - | - | - |
| C5 | 62 | 0 | - | - | - | - | - | - |

**Table 2:**

| Beispiel | Ethylnonafluoro-butylether [wt.-%] | s-Pentane [wt.-%] | Density [kg/m³] | Ramp pressue value at 10 mm [N] | Compression set 10% | Compression set 25% | Compression set 50% | Flow resistance [Pa*s/m²] |
|---|---|---|---|---|---|---|---|---|
| C6 | 0 | 17.8 | 8.0 | 22.1 | | | | 11500 |
| B4 | 0.5 | 17.8 | 8.6 | 24.7 | | | | 11500 |
| B5 | 1.0 | 17.8 | 8.0 | 26.0 | | | | 11000 |

## Claims

1. A process for producing a melamine-formaldehyde foam, said process comprising heating and foaming a mixture comprising at least one melamine-formaldehyde precondensate, at least one curative, at least a surfactant and a blowing agent mixture, wherein that blowing agent mixture comprises 2.5 to 20 wt.-% of a fluorinated ether.

2. A process according to claim 1, wherein that blowing agent mixture is a mixture from 5 to 20 wt.-% of a fluorinated ether and from 95 to 80 wt.-% of a hydrocarbon, alcohol, ketone or ester having a boiling point between 0 and 80°C.

3. A process according to claim 1 or 2, wherein that fluorinated ether is a compound with the formula CₙH₂ₙ₊₁OCₘF₂ₘ₊₁ with n=1-4 und m=1-8.

4. A process according to any of claims 1 to 3, wherein that fluorinated ether is selected from methylnonafluorobutylether, ethylnonafluorobutylether or mixtures therefrom.

5. A process according to any of claims 1 to 4, wherein that blowing agent mixture is a mixture of 5 to 20 wt.-% of methylnonafluorobutylether, ethylnonafluorobutylether or mixtures therefrom and 95 to 80 wt.-% of pentane.

6. A process according to any of claims 1 to 5, wherein 1 to 40 parts by weight of the blowing agent mixture is used per 100 parts by wt. of the at least one melamine-formaldehyde precondensate.

7. A melamine-formaldehyde foam obtainable by a process according to any of claims 1 to 6.

## Patentansprüche

1. Verfahren zur Herstellung eines Melamin-Formaldehyd-Schaumstoffs, bei dem man eine Mischung, die mindestens ein Melamin-Formaldehyd-Vorkondensat, mindestens einen Härter, mindestens ein Tensid und eine Treibmittelmischung umfasst, erhitzt und aufschäumt, wobei die Treibmittelmischung 2,5 bis 20 Gew.-% eines fluorierten Ethers umfasst.

2. Verfahren nach Anspruch 1, wobei es sich bei der Treibmittelmischung um eine Mischung aus 5 bis 20 Gew.-% eines fluorierten Ethers und 95 bis 80 Gew.-% eines Kohlenwasserstoffs, Alkohols, Ketons oder Esters mit einem Siedepunkt zwischen 0 und 80 °C handelt.

3. Verfahren nach Anspruch 1 oder 2, wobei es sich bei dem fluorierten Ether um eine Verbindung mit der Formel CₙH₂ₙ₊₁OCₘF₂ₘ₊₁ mit n = 1-4 und m = 1-8 handelt.

4. Verfahren nach einem der Ansprüche 1 bis 3, wobei der fluorierte Ether aus Methylnonafluorbutylether, Ethylnonafluorbutylether oder Mischungen davon ausgewählt ist.

5. Verfahren nach einem der Ansprüche 1 bis 4, wobei es sich bei der Treibmittelmischung um eine Mischung aus 5 bis 20 Gew.-% Methylnonafluorbutylether, Ethylnonafluorbutylether oder Mischungen davon und 95 bis 80 Gew.-% Pentan handelt.

6. Verfahren nach einem der Ansprüche 1 bis 5, wobei 1 bis 40 Gewichtsteile der Treibmittelmischung pro 100 Gewichtsteile des mindestens einen Melamin-Formaldehyd-Vorkondensats verwendet werden.

7. Melamin-Formaldehyd-Schaumstoff, erhältlich durch ein Verfahren nach einem der Ansprüche 1 bis 6.

## Revendications

1. Procédé pour la production d'une mousse de mélamine-formaldéhyde, ledit procédé comprenant le chauffage et le moussage d'un mélange comprenant au moins un précondensat de mélamine-formaldéhyde, au moins un agent de durcissement, au moins un tensioactif et un mélange d'agents de gonflement, ce mélange d'agents de gonflement comprenant 2,5 à 20 % en poids d'un éther fluoré.

2. Procédé selon la revendication 1, ce mélange d'agents de gonflement étant un mélange de 5 à 20 % en poids d'un éther fluoré et de 95 à 80 % en poids d'un hydrocarbure, d'un alcool, d'une cétone ou d'un ester possédant un point d'ébullition compris entre 0 et 80 °C.

3. Procédé selon la revendication 1 ou 2, cet éther fluoré étant un composé doté de la formule CₙH₂ₙ₊₁OCₘF₂ₘ₊₁ avec n = 1 à 4 et m = 1 à 8.

4. Procédé selon l'une quelconque des revendications 1 à 3, cet éther fluoré étant choisi parmi le méthylnonafluorobutyléther, l'éthylnonafluorobutyléther ou des mélanges de ceux-ci.

5. Procédé selon l'une quelconque des revendications 1 à 4, ce mélange d'agents de gonflement étant un mélange de 5 à 20 % en poids de méthylnonafluorobutyléther, d'éthylnonafluorobutyléther ou de mélanges de ceux-ci et de 95 à 80 % en poids de pentane.

6. Procédé selon l'une quelconque des revendications 1 à 5, 1 à 40 parties en poids du mélange d'agents de gonflement étant utilisées par 100 parties en poids de l'au moins un précondensat de mélamine-formaldéhyde.

7. Mousse de mélamine-formaldéhyde pouvant être obtenue par un procédé selon l'une quelconque des revendications 1 à 6.
